# EUROPEAN PATENT APPLICATION

(11) **EP 4 635 724 A1**
(43) Date of publication of application: **22.10.2025**
(21) Application number: 23903009.1
(22) Date of filing: 26.07.2023
(51) Int. Cl.: B29D 30/16, B29D 30/48

(54) **METHOD FOR MANUFACTURING TIRE AND DEVICE FOR MANUFACTURING TIRE**

(30) Priority: 13.12.2022 JP 2022198949
(71) Applicant: BRIDGESTONE CORPORATION, Chuo-ku Tokyo 104-8340 (JP)
(72) Inventor: SATO, Kazuo, Tokyo 104-8340 (JP); KOYANAGI, Reo, Tokyo 104-8340 (JP)
(74) Representative: Marks & Clerk LLP
(86) International application number: PCT/JP2023/027461
(87) International publication number: WO 2024/127703

(57) **Abstract**

A method of manufacturing a tire configured by bonding a bead wire to an outside face of a tire configuration member including an un-vulcanized rubber supported from an inside by a core, including pressing the bead wire against the outside face by pressing parallel to a rotation axis line of the core, and moving the bead wire in a radial direction of the core while maintaining the parallel pressing state so as to bond in a spiral shape and form a bead.

## Description

### Technical Field

The present disclosure relates to a tire manufacturing method, and a tire manufacturing device.

### Background Art

A tire described in Japanese Patent Application Laid-Open (JP-A) No. H6-171306 is known.

### SUMMARY OF INVENTION

### Technical Problem

The present disclosure provides a tire manufacturing method and a tire manufacturing device that are capable of suppressing variation in internal diameter of a bead.

### Solution to Problem

A tire manufacturing method according to a first aspect is a method of manufacturing a tire configured by bonding a bead wire to an outside face of a tire configuration member including an un-vulcanized rubber supported from an inside by a core. The tire manufacturing method includes pressing the bead wire against the outside face by pressing parallel to a rotation axis line of the core, and moving the bead wire in a radial direction of the core while maintaining the parallel pressing state so as to bond in a spiral shape and form a bead.

A tire manufacturing method according to a second aspect is the tire manufacturing method according to the first aspect, wherein the pressing is performed by a bonding roller supported by a piston rod of an air cylinder provided parallel to the rotation axis line.

A tire manufacturing method according to a third aspect is the tire manufacturing method according to the first aspect or the second aspect, wherein a pressing force pressing the bead wire against the outer peripheral face is in a range of from 3N to 100N.

A tire manufacturing method according to a fourth aspect is the tire manufacturing method according to the first aspect, wherein the tire configuration member is a carcass ply configured by plural strands of cord arranged parallel to each other and covered in an un-vulcanized rubber.

A tire manufacturing device according to a fifth aspect includes a core that is rotatable and that supports a tire configuration member configured including an un-vulcanized rubber from an inside thereof, a pressing device that presses a bead wire fed out from a wire supply section against an outside face of the tire configuration member by pressing parallel to a rotation axis line of the core, and a moving device that moves the pressing device in a radial direction of the core while maintaining the parallel pressing state.

The present disclosure enables provision of a tire manufacturing method and a tire manufacturing device capable of suppressing variation in the internal diameter of a bead.

### BRIEF DESCRIPTION OF DRAWINGS

Fig. 1 is a tire width direction cross-section illustrating a bead of a pneumatic tire manufacture by a tire manufacturing device according to an exemplary embodiment of the present disclosure.
Fig. 2 is a face-on view illustrating a bead.
Fig. 3 is a perspective view illustrating a schematic configuration of a tire manufacturing device according to an exemplary embodiment of the present disclosure.
Fig. 4 is a perspective view schematically illustrating a robot employed in a tire manufacturing device according to an exemplary embodiment of the present disclosure.
Fig. 5 is a perspective view illustrating an end effector applicable to the robot illustrated in Fig. 3.
Fig. 6 is a diagram illustrating a drive system to drive an air cylinder.
Fig. 7 is a side view schematically illustrating the end effector illustrated in Fig. 5, with a discharge portion side of the end effector viewed in a horizontal direction.
Fig. 8 is a perspective view schematically illustrating an example when a bead wire is attached to a one side face of a tire configuration member using the robot illustrated in Fig. 3.
Fig. 9 is a carcass ply cross-section illustrating a manner in which a bead wire is being pressed against a carcass ply.
Fig. 10 is a carcass ply cross-section illustrating a manner in which a bead wire is being pressed against a carcass ply according to a comparative example.

### DESCRIPTION OF EMBODIMENTS

Description follows, with reference to the drawings, regarding a tire manufacturing device 100 for manufacturing a green tire M according to an exemplary embodiment of the present disclosure, and a pneumatic tire 10 manufactured by vulcanization molding the green tire M formed using the tire manufacturing device 100.

Note that in the drawings an arrow A direction indicates a radial direction of a core AM, described later, and of the pneumatic tire 10, and an arrow B direction indicates an axial direction of the core AM and of the pneumatic tire 10.

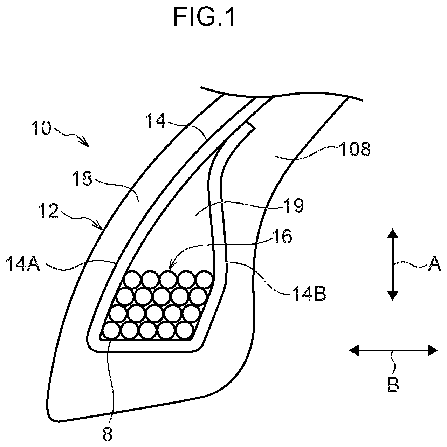

Fig. 1 illustrates, a bead section 12 of the pneumatic tire 10 obtained by vulcanization molding an un-vulcanized green tire as manufactured using the tire manufacturing device 100 of the present exemplary embodiment, described later.

The pneumatic tire 10 includes a carcass ply 14 configured as a toroidal shape straddling between one of the bead sections 12 and the other of the bead sections 12 (only one thereof is illustrated in Fig. 1). The carcass ply 14 is, as an example, a carcass ply of a normal configuration employed in a so-called radial tire, with plural strands of carcass cord arranged parallel to each other and covered in a rubber.

A bead 16 formed by a bead wire 8 is embedded in the bead section 12, and the carcass ply 14 is wrapped around the bead 16 from a tire inside to an outside thereof. Note that a bead filer 19 is provided at the tire radial direction outside of the bead 16.

As illustrated in Fig. 1, an inner liner 18 is arranged at a tire axial direction (arrow B direction) inside of the carcass ply 14, and an outside rubber member 108 is arranged at a tire axial direction outside of the carcass ply 14.

A tire structure of the pneumatic tire 10 of the present exemplary embodiment is, apart from the bead section 12, configured similarly to a normal pneumatic tire, and detailed explanation thereof will be omitted. Note that run flat tires are encompassed in normal pneumatic tires referred to here.

### Tire Manufacturing Device

Next, description follows regarding the tire manufacturing device 100 for manufacturing the pre-vulcanization molding green tire M employed for the pneumatic tire 10 of the present exemplary embodiment.

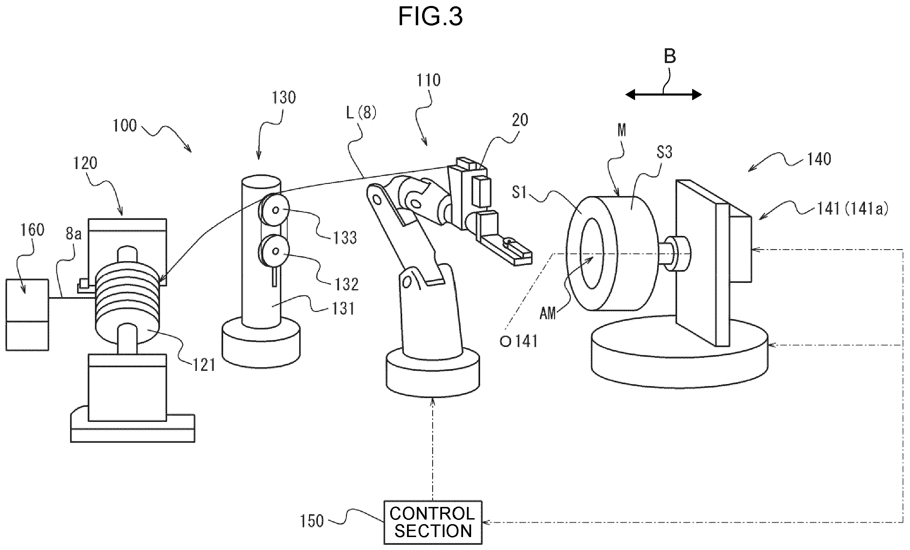

As illustrated in Fig. 3, the tire manufacturing device 100 according to the present exemplary embodiment includes a robot 110 as an example of a moving device, a wire supply section 120 that supplies the bead wire 8 to the robot 110, a festoon 130 arranged between the robot 110 and the wire supply section 120, a target object support section 140 that supports the green tire M, and a control section (robot control section) 150 that controls the robot 110 so as to attach the bead wire 8 to the green tire M.

In the present exemplary embodiment, the wire supply section 120 includes a rotation drum 121 that stores the bead wire 8 wound thereon. In the present exemplary embodiment, the bead wire 8 wound onto the rotation drum 121 is covered by a covering material 8a for protecting the bead wire 8 from scratches or the like.

The tire manufacturing device 100 further includes a covering material collection section 160. The covering material collection section 160 collects the covering material 8a that has been removed from the bead wire 8 and pulled out from the wire supply section 120.

The festoon 130 is able to remove winding curl remaining in the bead wire 8, residual stress remaining in the bead wire 8, or both thereof. In the present exemplary embodiment, the festoon 130 includes a support pillar 131, a fixed roller 133 rotatably fixed to the support pillar 131, and a sliding roller 132 provided so as to be rotatable and slidable with respect to the support pillar 131. The bead wire 8 is entrained over the fixed roller 133 and the sliding roller 132. The winding curl of the bead wire 8 and the like can be removed by separating the fixed roller 133 and the sliding roller 132.

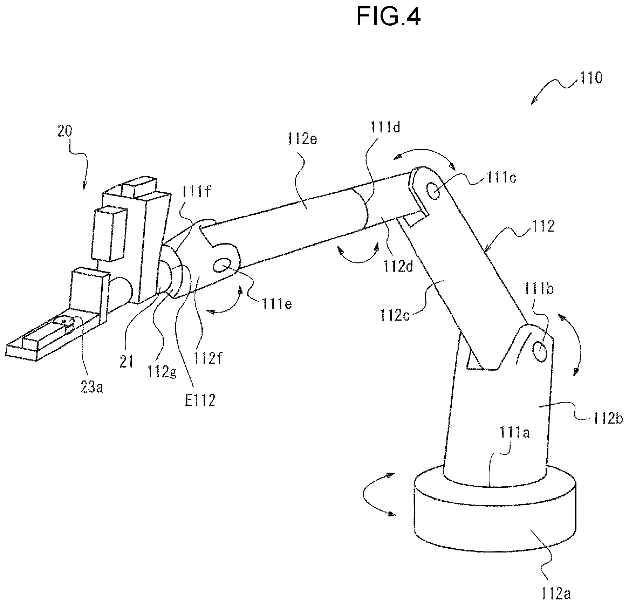

As illustrated in Fig. 4, the robot 110 includes an end effector 20, described later. In the present exemplary embodiment, the robot 110 includes a robot arm 112 including joints 111. The end effector 20 is attached to a distal end of the robot arm 112. Moreover, in the present exemplary embodiment, movement of the robot 110 is controlled by a control section 150. A specific example of the control section 150 is a computer. The movement of the robot 110 can, for example, be controlled based on a program installed on the computer.

The robot 110 is configured by the robot arm 112 including at least one of the joints 111, and the end effector 20. In the present exemplary embodiment, the end effector 20 is attached to a distal end E112 of the robot arm 112.

The robot 110 has degrees of freedom of six axes or more. In the present exemplary embodiment the robot 110 is a six-axis robot. The robot arm 112 includes a first arm 112a, a second arm 112b, a third arm 112c, a fourth arm 112d, a fifth arm 112e, a sixth arm 112f, and a seventh arm 112g. The six-axis robot includes six joints (111a to 111f).

A first joint 111a, for example, couples the second arm 112b so as to be able to turn with respect to the first arm 112a. A second joint 111b, for example, couples the third arm 112c so as to be able to swing in a front-rear direction with respect to the second arm 112b. A third joint 111c, for example, couples the fourth arm 112d so as to be able to swing in a height direction with respect to the third arm 112c. A fourth joint 111d, for example, couples the fifth arm 112e so as to be able to turn with respect to the fourth arm 112d. A fifth joint 111e couples the sixth arm 112f so as to be able to swing in the height direction with respect to the fifth arm 112e. A sixth joint 111f, for example, couples a seventh arm 111g so as to be able to turn with respect to the sixth arm 112f. A distal end of the seventh arm 111g configures the distal end E112 of the robot arm 112. The end effector 20 can be attached to the distal end of the seventh arm 111g.

The robot 110 accordingly has, in an XYZ coordinate system, three degrees of freedom in a straight-line direction, i.e. in the X axis direction, Y axis direction, and Z axis direction, and three degrees of freedom of rotation about an axis, i.e. about the X axis, the Y axis, and the Z axis.

The X axis, Y axis, and Z axis referred to here are axes that are respectively orthogonal to each other. In the present exemplary embodiment, for example, the Z axis can be set so as to be parallel to the vertical direction. Moreover, in the present exemplary embodiment, the X axis can be set so as to be parallel with respect to a tire central axis line when the tire central axis line lies in a horizontal plane. Furthermore, in the present exemplary embodiment, the Y axis can be set so as to be parallel to the tire width direction center line when viewed with the tire width direction center line in a horizontal plane in a state in which the tire central axis line lies in a horizontal plane.

As illustrated in Fig. 3, the tire manufacturing device 100 includes a target object drive section 141 for rotating the core AM, and a control section (target object drive section control section) 150 for controlling the target object drive section 141. The core AM supports a tire configuration member, described later, from the inside thereof. The target object drive section 141 is provided to the target object support section 140. In the present exemplary embodiment, movement of the target object drive section 141 is controlled by the control section 150.

In the present exemplary embodiment, control of the robot 110 and the target object drive section 141 is executed by the common control section 150.

The target object drive section 141 includes a target object rotation drive section 141a that rotates the core AM for supporting the green tire M. The target object rotation drive section 141a is able to rotate the core AM about a rotation axis line 0141 set so as to be horizontal. In the present exemplary embodiment, the target object rotation drive section 141a is able to rotate the core AM by rotations each of a specific angle about the rotation axis line 0141 as commanded from the control section 150.

Moreover, the control section 150 controls a position of the robot 110 such that the end effector 20 is positioned at a position according to the rotation angle of the green tire M. The robot 110 is able to move the end effector 20 to a target position according to the rotation angle of the core AM as commanded from the control section 150.

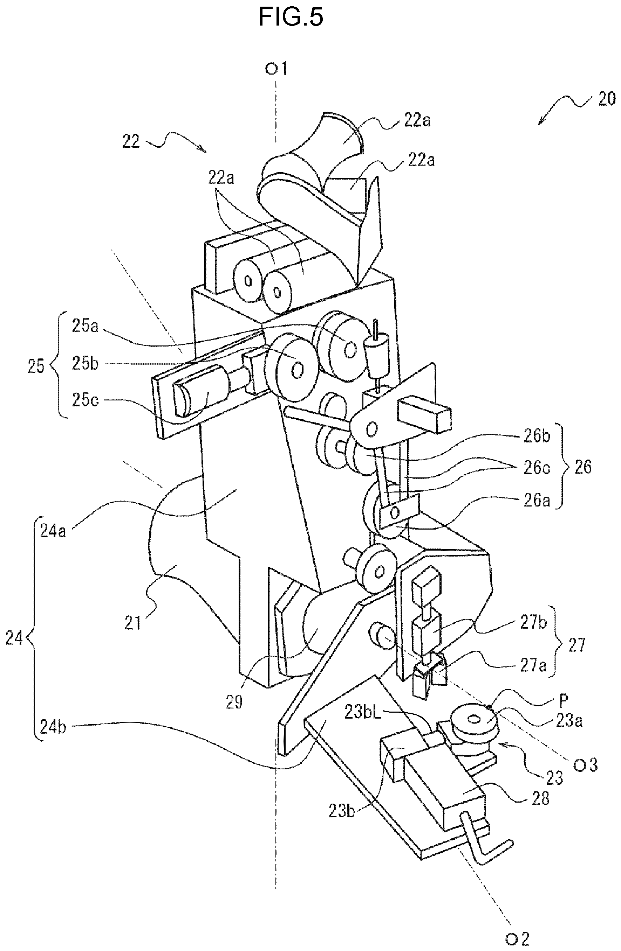

Fig. 5 schematically illustrates a state, according to an exemplary embodiment of the present disclosure, in which the end effector 20 is positioned with a second support portion 24b of the end effector 20 at a correct position. The correct position is a position in which the second support portion 24b has been positioned such that a bonding roller 23a, described later, is positioned at an upper side and the bonding roller 23a faces a one side face of the green tire M (a side face on the opposite side to the target object drive section 141 side).

Note that, in a bonding process of the bead wire 8, described later, the bonding roller 23a is maintained in this orientation by the robot 110 such that a rotation axis line of the bonding roller 23a is in a vertical direction.

The end effector 20 includes a joint portion 21, an introduction portion 22 for introducing the bead wire 8, a discharge portion 23 for discharging the bead wire 8 that was introduced from the introduction portion 22, and a support section 24 for supporting the joint portion 21, the introduction portion 22, and the discharge portion 23.

The support section 24 includes a first support portion 24a placing the joint portion 21 and the introduction portion 22 at a separation from each other, and a second support portion 24b for placement of the discharge portion 23.

The second support portion 24b is coupled to the first support portion 24a such that an extension axis line O2 of the second support portion 24b intersects with an extension axis line O1 of the first support portion 24a, and also such that the second support portion 24b is positioned at a side opposing the joint portion 21 across the first support portion 24a. In the present exemplary embodiment, the joint portion 21 can, as illustrated in Fig. 4, be attached to the distal end of the seventh arm 112g, namely, to the distal end E112 of the robot arm 112.

As illustrated in Fig. 5, the introduction portion 22 introduces the bead wire 8 into the end effector 20. In the present exemplary embodiment, the introduction portion 22 includes incoming wire guide rollers 22a. The incoming wire guide rollers 22a are attached so as to be rotatable with respect to the first support portion 24a. The incoming wire guide rollers 22a are able to lead the bead wire 8 to inside the end effector 20 by the bead wire 8 being entrained therearound. The bead wire 8 is accordingly introduced to inside the end effector 20 by the incoming wire guide rollers 22a.

The reference numeral 25 indicates a wire-shaped member lead-in portion for leading the bead wire 8 introduced from the introduction portion 22 to inside the end effector 20. The wire-shaped member lead-in portion 25 is arranged on the first support portion 24a.

In the present exemplary embodiment, the wire-shaped member lead-in portion 25 includes a feed roller 25a rotatable with respect to the first support portion 24a, a pinch roller 25b that is rotatable with respect to the first support portion 24a and that is slidable with respect to the first support portion 24a, and a pinch roller actuator 25c for moving the pinch roller 25b. The feed roller 25a can be rotated by a drive source such as a servo motor or the like.

The pinch roller 25b is arranged rotatable with respect to the first support portion 24a. The pinch roller actuator 25c is able to press the pinch roller 25b against the feed roller 25a by pressing the pinch roller 25b toward the feed roller 25a. The bead wire 8 nipped between the feed roller 25a and the pinch roller 25b can accordingly be lead inside the end effector 20.

The pinch roller 25b can be separated from the feed roller 25a by using the pinch roller actuator 25c to move the pinch roller 25b away from the feed roller 25a. This enables a pressing force on the bead wire 8 between the feed roller 25a and the pinch roller 25b to be adjusted or released.

Reference numeral 26 indicates a tension control section for controlling tension of the bead wire 8. According to the present exemplary embodiment, the end effector 20 includes the tension control section 26 on the first support portion 24a, and specifically the tension control section 26 is positioned further toward the second support portion 24b side than the introduction portion 22. More specifically, the tension control section 26 is positioned further to a bead wire 8 feed direction downstream side than the introduction portion 22 and, furthermore, in the present exemplary embodiment is positioned further to the bead wire 8 feed direction downstream side than the wire-shaped member lead-in portion 25.

The tension control section 26 is able to remove a winding curl remaining in the bead wire 8, a residual stress remaining in this wire shaped member, or to remove both thereof by, for example, using a dancer arm 26c, described later, to change a winding direction of the bead wire 8, change a distance when the bead wire 8 is wound on two rollers, or by both thereof.

Specifically, an objective of the tension control section 26 is to suppress disturbance in tension generated by unwinding of the wire supply section 120 or by actuation of the festoon 130. This accordingly suppresses concern regarding occurrence of disturbance in tension, the effect thereof (for example, the residual stress mentioned above), or positional displacement during winding.

In the present exemplary embodiment, the tension control section 26 includes a dancer roller 26a and a guide roller 26b wound with the bead wire 8 fed out from the wire-shaped member lead-in portion 25, and the dancer arm 26c that rotatably supports the dancer roller 26a. The bead wire 8 is wound onto the dancer roller 26a. In the present exemplary embodiment, a tension of the bead wire 8 can, for example, be controlled by changing the position of the dancer roller 26a according to an opening angle of the dancer arm 26c. The tension-controlled bead wire 8 is fed out to the discharge portion 23 through the tension control section 26.

The discharge portion 23 takes the bead wire 8 that has been fed out from the tension control section 26 and further feeds it out toward the core AM. In the present exemplary embodiment, the discharge portion 23 includes the bonding roller 23a. The bonding roller 23a is arranged so as to be rotatable at a distal end portion of a piston rod 23bL of an air cylinder 23b, described later. The bonding roller 23a and the air cylinder 23b are an example of a pressing device of the present exemplary embodiment.

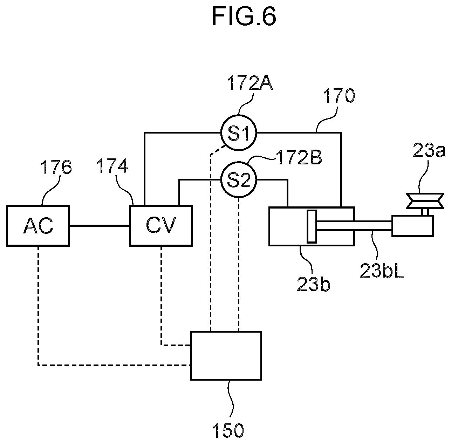

A peripheral groove is formed to an outer peripheral face of the bonding roller 23a. The bead wire 8 is held at both roller axis sides thereof by the peripheral groove (see Fig. 6) of the bonding roller 23a.

The bonding roller 23a is able to take the bead wire 8 flowing through the end effector 20 and feed it out to outside the end effector 20. By pressing the bonding roller 23a in this manner against a tire configuration member configuring the green tire M, described later, the bead wire 8 fed out from the bonding roller 23a can be bonded to the tire configuration member.

This means that by rotating the core AM in a state in which the bonding roller 23a has been pressed against the tire configuration member, the bead wire 8 can be sequentially bonded to the outer face of the tire configuration member.

As described below, in the present exemplary embodiment the tire configuration member is an un-vulcanized carcass ply 14. The un-vulcanized carcass ply 14 is configured by covering plural strands of carcass cord arranged parallel to each other with an un-vulcanized rubber.

Description follows with reference to Fig. 3. In the tire manufacturing device 100 according to the present exemplary embodiment, the core AM to which the tire configuration member has been bonded is sequentially rotated by rotations each of a specific angle when bonding the bead wire 8 to the outer face of the tire configuration member.

Moreover, in the tire manufacturing device 100 according to the present exemplary embodiment, the robot 110 is positionally controlled to a specific position corresponding to the rotation angle of the green tire M such that the bonding roller 23a of the end effector 20 is arranged at a target position on the tire configuration member to which the bead wire 8 is to be bonded.

In the present exemplary embodiment, a winding position of the bead wire 8 on the outer peripheral face of the tire configuration member depends on the position of the bonding roller 23a of the end effector 20. As illustrated in Fig. 5, in the end effector 20 according to the present exemplary embodiment, the bonding roller 23a is arranged with a material path position P where the bead wire 8 is discharged at a position on a rotation central axis line O3 of a drive rotation section 29, described later.

As illustrated in Fig. 5, the discharge portion 23 includes the air cylinder 23b for causing the bonding roller 23a to approach the core AM or to more away therefrom. When the bead wire 8 is being bonded to the tire configuration member, the air cylinder 23b is maintained by the robot 110 such that its axial line is parallel to the rotation axis line 0141 of the core AM.

The air cylinder 23b projects the piston rod 23bL, and by pressing the bonding roller 23a toward the tire configuration member parallel to the rotation axis line 0141 of the core AM, in other words horizontally, the bead wire 8 supported by the bonding roller 23a is able to be pressed horizontally toward the tire configuration member.

The bonding roller 23a can be caused to separate from the tire configuration member by moving the air cylinder 23b, and consequently the bonding roller 23a, away from the tire configuration member. This thereby enables a pressing force of the bead wire 8 with respect to the tire configuration member to be adjusted or released.

As illustrated in Fig. 6, pressure sensors 172A, 172B, a pressure adjustment/switching valve 174, and an air compressor 176 are connected to the air cylinder 23b through tubing 170. The air compressor 176, the pressure sensors 172A, 172B, and the pressure adjustment/switching valve 174 are connected to the control section 150, and the control section 150 controls the pressure adjustment/switching valve 174 so as to supply compressed air at a specific pre-set pressure to the air cylinder 23b.

This thereby enables the bead wire 8 supported by the bonding roller 23a to be pressed against the tire configuration member with a specific pressing force.

Note that in the present exemplary embodiment, the pressing force of the bead wire 8 can be adjusted to from 3N to 100N, for example, by adjusting the pressure of the compressed air.

As illustrated in Fig. 5, the reference numeral 27 indicates a cutting portion for cutting the bead wire 8 fed out from the discharge portion 23. The cutting portion 27 is provided to the first support portion 24a in the present exemplary embodiment. In the present exemplary embodiment, the cutting portion 27 includes a cutter 27a for cutting the bead wire 8, and an actuator 27b to move the cutter 27a in an extending or contracting movement.

The reference numeral 28 indicates an information acquisition section for acquiring peripheral information of the green tire M. The end effector 20 according to the present exemplary embodiment includes the information acquisition section 28 on the second support portion 24b. Specifically, the end effector 20 includes the information acquisition section 28 at a position on the distal end side of the second support portion 24b.

The information acquisition section 28 collects information at a periphery of the green tire M (tire configuration member). The peripheral information to the green tire M (hereinafter also referred to as "green tire peripheral information") includes, for example, a position and profile of the tire configuration member, a position of the bead wire 8, and the like. The end effector 20 includes the information acquisition section 28 provided to the second support portion 24b, and so bonding of the bead wire 8 can be performed based on the peripheral information of the green tire M obtained from the information acquisition section 28.

Moreover, examples of the information acquisition section 28 include, for example, an image sensor. In the present exemplary embodiment, the green tire peripheral information obtained from the information acquisition section 28 is input to the control section 150.

Based on the green tire peripheral information, the control section 150 is able to control the robot 110 and the target object support section 140 such that the bead wire 8 is bonded to a specific position on the side face of the tire configuration member.

According to the present exemplary embodiment, the end effector 20 is able to feed out the bead wire 8 toward the tire configuration member so as to attach the bead wire 8 to the tire configuration member. By employing the end effector 20 matched to movement of the robot 110, the bead wire 8 can be attached to a desired position on the side face of the tire configuration member configuring the green tire M.

Moreover, in the end effector 20, the support section 24 includes the first support portion 24a and the second support portion 24b, with the second support portion 24b coupled to the first support portion 24a such that an extension axis line O2 of the second support portion 24b intersects with an extension axis line O1 of the first support portion 24a, and also the second support portion 24b is positioned at a side facing the joint portion 21 across the first support portion 24a.

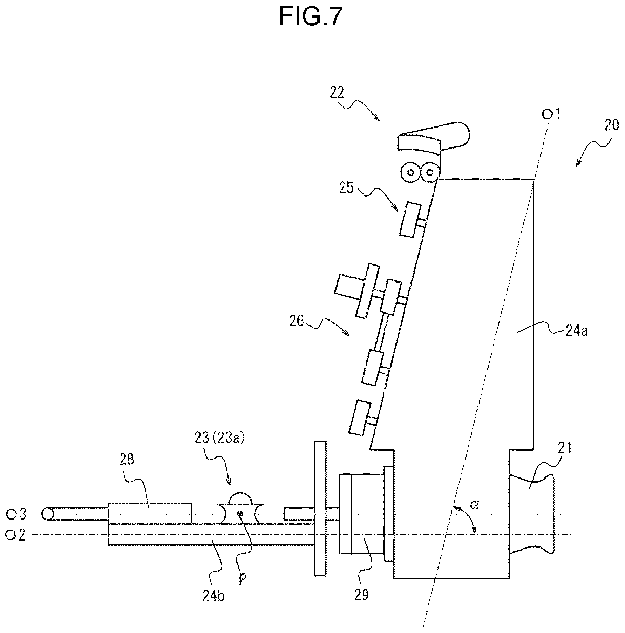

Fig. 7 schematically illustrates the end effector 20 from the discharge portion 23 side. As is apparent from reference to Fig. 7, when looking at the end effector 20 along the X axis direction (a direction parallel to the tire central axis line when the tire central axis line lies in a horizontal plane), the extension axis line O1 of the first support portion 24a is further to the joint portion 21 side than the discharge portion 23 side and is inclined by an angle α with respect to the extension axis line O2 of the second support portion 24b.

Moreover, in the present exemplary embodiment, the rotation central axis line O3 of the drive rotation section 29 is an axial line passing through a peripheral groove center (deepest portion of a groove bottom of the peripheral groove) of the bonding roller 23a in side view as illustrated in Fig. 7. Namely, the bonding roller 23a is arranged parallel to the rotation central axis line O3 of the drive rotation section 29, with the material path position P of the bonding roller 23a present on the rotation central axis line O3 of the drive rotation section 29.

Note that the bead wire 8 can also be bonded to the other side face of the tire configuration member by controlling movement of the robot 110 such that the bonding roller 23a bonds the bead wire 8 toward the other side face side (target object drive section 141 side) of the tire configuration member configuring the green tire M. In such cases, the bonding position can be quickly switched by rotating the second support portion 24b 180° with respect to the first support portion 24a.

This thereby enables the bead wire 8 to be bonded to both sides of the tire configuration member bonded to the core AM.

### Bead Forming

In the present exemplary embodiment, the tire manufacturing device 100 is used at the stage of manufacturing the green tire M so as to configure a bead (also called a bead ring or a bead core) 16 as illustrated in Fig. 1, and bonds the bead wire 8 to the tire configuration member as described below. In the present exemplary embodiment, the carcass ply 14 is a specific example of the tire configuration member to which the bead wire 8 is bonded.

At a first process, the un-vulcanized inner liner 18 is bonded to the outer face of the core AM.

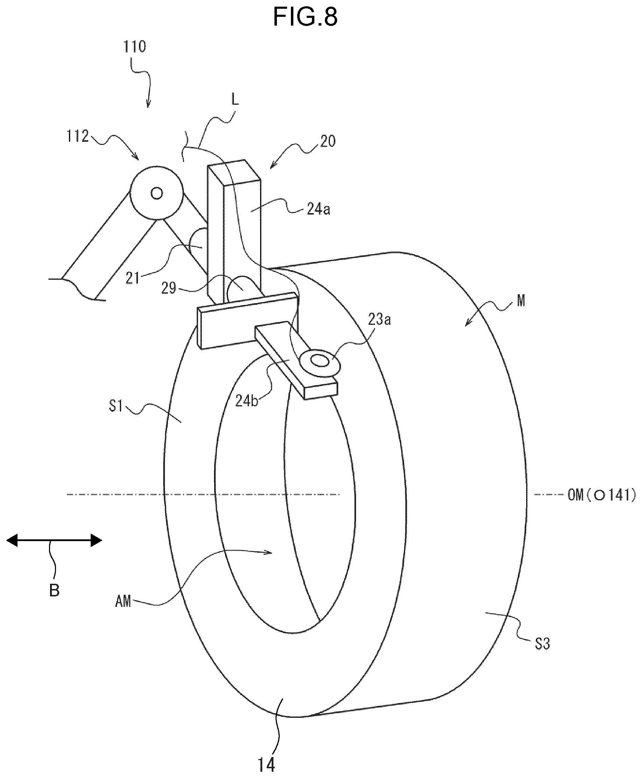

Next, the un-vulcanized carcass ply 14 is wound so as to cover the un-vulcanized inner liner 18 (see Fig. 8).

Then the bead wire 8 is bonding in a spiral shape as described below to a specific position of the carcass ply 14 (a position that will later become the bead section 12 of the pneumatic tire 10).

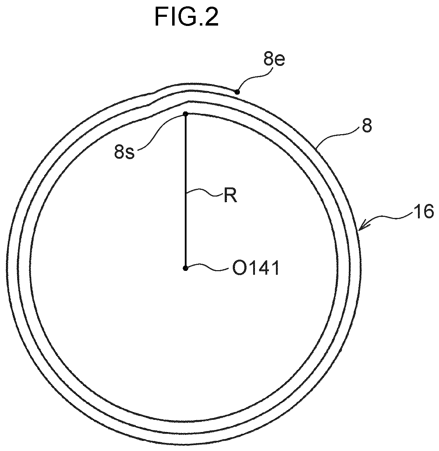

The robot 110 is operated to arrange the bonding roller 23a that supports the bead wire 8 at a specific position of the carcass ply 14, this being a position opposing a bonding start position of the bead wire 8. The bonding start position of the bead wire 8 is, as illustrated in Fig. 2, a position separated by a pre-set distance R from the rotation axis line 0141, this being a position substantially corresponding to an inner peripheral portion (see Fig. 1) of the bead section 12 of the pneumatic tire 10. The internal diameter (R × 2) of a bead inside 16A is decided by this bonding start position. Note that in Fig. 2, reference numeral 8s indicates a start end of the bead wire 8 at start of winding, and reference numeral 8e indicates a finish end of the bead wire 8 at end of winding.

Note that although in the present disclosure the bead wire is bonded to the outside face of the tire configuration member configured including an un-vulcanized rubber supported by the core from the inside, in the present exemplary embodiment, the tire configuration member is the carcass ply 14, the outside face of the tire configuration member means a tire axial direction outside face of a main body portion 14A of the carcass ply 14 straddling between one of the bead section 12 and the other of the bead section 12 prior to folding-back an end portion 14B of the carcass ply 14.

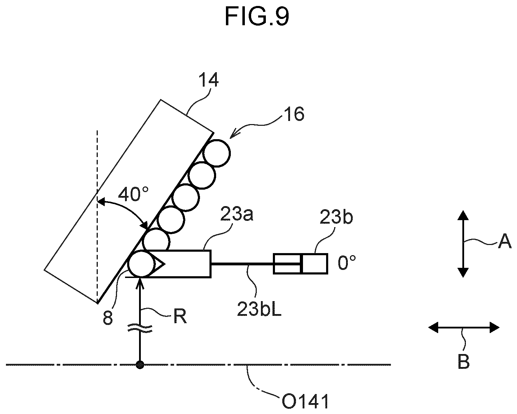

Next, the air cylinder 23b is operated, as illustrated in the schematic cross-section of Fig. 9, the bead wire 8 supported by the bonding roller 23a is pressed against a side face of the carcass ply 14 with a specific pressing force (from 3N to 100N), the core AM is rotated by a specific angle (slightly under 360°), and a first revolution of the bead wire 8 is bonded so as to configure a true circle.

Next, while continuing to rotate the core AM, the bonding roller 23a is moved from slightly in front and close to the bonding start position of the bead wire 8 so as to move along the side face of the carcass ply 14, and bonding of the bead wire 8 is continued so as to gradually move toward the radial direction outside while maintaining a parallel state of the air cylinder 23b, and then the bonding roller 23a is moved to the radial direction outside of the first revolution of the bead wire 8 bonded firstly, such that a second revolution of the bead wire 8 is in close proximity to the first revolution of the bead wire 8.

As schematically illustrated in Fig. 2, the bead wire 8 is accordingly bonding in a spiral shape to the outside face of the carcass ply 14, and a first layer is formed on the carcass ply side of the bead 16.

Fig. 9 illustrates a manner in which the bead wire 8 is bonded from the radial direction inside (bottom side in the drawing) to the radial direction outside (top side in the drawing), and Fig. 9 illustrates a manner in which the bonding roller 23a is pressing the first revolution of the bead wire 8 against the carcass ply 14. The end effector 20 is moved to the radial direction outside by the robot 110 such that the axial line of the air cylinder 23b is maintained parallel with respect to the rotation axis line 0141 of the core AM and the bonding roller 23a is moved along the outside face of the carcass ply 14.

Note that for the first revolution of the bead wire 8, the bonding roller 23a is not moved in the radial direction, and so the bead wire 8 is bonded to the carcass ply 14 at a constant diameter, namely in a true circle. This thereby enables the innermost revolution portion to be formed with suppressed variation in internal diameter. Note that for the second and subsequent revolutions, the bead wire 8 is also bonded in a true circle.

For the bead wire 8 of the present exemplary embodiment formed in a spiral shape, the innermost revolution, i.e. first revolution, may be formed as a true circle of a pre-set dimension, and the second and subsequent revolutions positioned at the radial direction outside of the innermost revolution may, for example, be formed in a spiral shape of gradually increasing diameter.

Note that pressing force is insufficient when the pressing force of the bead wire 8 with respect to the un-vulcanized carcass ply 14 is less than 3N, leading to a concern that the bead wire 8 might no longer bond to the un-vulcanized rubber surface of the carcass ply 14. However, pressing force is too high when the pressing force exceeds 100N, with this leading to a concern that the bead wire 8 might dig unnecessarily into the un-vulcanized rubber of the carcass ply 14.

In the tire manufacturing method of the present exemplary embodiment, the bead wire 8 can be pressed against and bonded to the un-vulcanized rubber surface of the carcass ply 14 with a pressing force that is in a range of from 3N to 100N, and so the bead wire 8 can be bonded in an appropriate state to the un-vulcanized rubber surface of the carcass ply 14.

Note that even if a position where the bead wire 8 is pressed against the outside face of the un-vulcanized rubber of the carcass ply 14 has changed somewhat, the piston rod 23bL of the air cylinder 23b extends or contracts (due to the air in the cylinder being expandable), enabling the bead wire 8 to be pressed against the carcass ply 14 with a substantially constant pressing force.

After the first layer has been formed at the carcass ply 14 side of the bead 16, the bead 16 can be formed configured with a parallelogram shaped cross-section as illustrated in Fig. 1 by, similarly to the first layer, sequentially forming second and subsequent layers from the bead wire 8 formed in spiral shapes at a side face of the first layer.

Note that after the bead wire 8 has been bonded to the radial direction outermost side of the first layer of the bead wire 8, the second layer can be formed in a spiral shape toward the radial direction inside. In cases in which the bead wire 8 has been bonded in a spiral shape from the outer peripheral side to the inner peripheral side, the innermost revolution is formed as a true circle similarly to in the first layer.

Although the bead 16 of the present exemplary embodiment has a cross-section that is parallelogram shaped, the cross-section shape of the bead 16 is not limited to being a parallelogram, and may be a trapezoidal shape, may be a polygonal shape, or may be a straight line shape.

After the bead 16 has been formed with a specific cross-section shape, the un-vulcanized bead filer 19 (see Fig. 1) is bonded to the tire radial direction outside of the bead 16, and then a tire width direction end portion of the carcass ply 14 is wrapped therearound.

After this, the un-vulcanized outside rubber member 108, configuring the tire width direction outside portion of the bead section 12 and the tire side section, is bonded to the outside face of the un-vulcanized carcass ply 14, enabling the green tire M to be formed by bonding an un-vulcanized belt (omitted in the drawings), and an un-vulcanized tread rubber (omitted in the drawings), to the outer peripheral face of the un-vulcanized carcass ply 14.

As described above, the present exemplary embodiment enables the bead 16 to be formed with suppressed variation in internal diameter on the tire configuration member, by using the bonding roller 23a and the air cylinder 23b as a pressing device to press the bead wire 8 that has been fed out from the wire supply section 120 against the outside face of the tire configuration member configured including an un-vulcanized rubber by pressing parallel to the rotation axis line 0141 of the core AM, and by bonding the bead wire 8 in a spiral shape pressed in a radial direction of the core AM while the parallel state is maintained. When the tire configuration member is the carcass ply 14, the bead 16 can be formed on the outer face side of the carcass ply 14. The core AM supporting the tire configuration member is rotatable, and the pressing device is moved in the radial direction of the core AM by the robot 110, serving as the moving device, while the core AM supporting the tire configuration member is being rotated, enabling the bead wire 8 to be bonded in a spiral shape to the outside face of the tire configuration member. Due to being able to form the fixed internal diameter bead 16 in this manner with suppressed variation in internal diameter, the pneumatic tire 10 obtained by vulcanization molding the green tire M enables appropriate fitting of the bead section 12 onto a rim (omitted in the drawings).

### Comparative Example

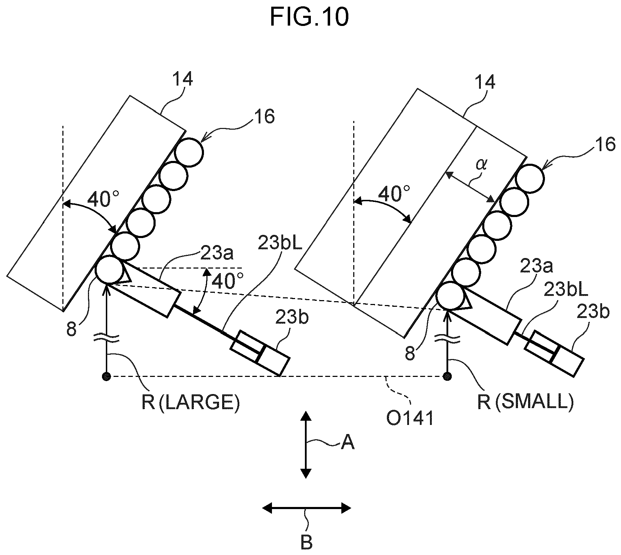

Explanation follows with reference to Fig. 10 of a tire manufacturing method according to a comparative example. Note that the same reference numerals will be appended to configuration the same as in the above exemplary embodiment, and description omitted thereof.

The carcass ply 14 illustrated on the right side has, for example, a thickness of coated un-vulcanized rubber that is α thicker than the carcass ply 14 illustrated on the left side.

Fig. 10 illustrates a case in which the carcass ply 14 is inclined at 40° with respect to radial directions from the rotation axis line 0141 of the core AM.

In the comparative example, the air cylinder 23b is inclined with an axis line thereof that forms a right angle to the outer surface of the carcass ply 14, and a distance of the air cylinder 23b from the rotation axis line 0141 does not change during bonding of the first revolution worth of the bead wire 8 irrespective of the thickness of the carcass ply 14.

When the position of the air cylinder 23b does not change, and the thickness of the carcass ply 14 differs as illustrated in Fig. 10, for example a case in which the carcass ply 14 is thicker as illustrated on the right side of Fig. 10, the position of the outer surface of the carcass ply 14 for bonding the bead wire 8 to changes, and correspondingly the piston rod 23bL supporting the bonding roller 23a is pulled in to the main body side of the air cylinder 23b.

The air cylinder 23b of the comparative example is inclined with respect to the radial direction of the rotation axis line 0141 of the core AM, and so when the piston rod 23bL is pulled in toward the main body side of the air cylinder 23b, a position of the bonding roller 23a supported by the piston rod 23bL is displaced toward the rotation axis line 0141 side, and consequently the position where the bead wire 8 is bonded is also displaced toward the rotation axis line O141 side. Note that in an opposite scenario of a case in which the thickness of the carcass ply 14 is thinner, the position where the bead wire 8 is bonded is displaced to the opposite side to the rotation axis line 0141 side.

When the bonded position of the bead wire 8 is displaced in the radial direction according to the thickness of the carcass ply 14, a distance (R) from the rotation axis line 0141 of the bead wire 8 bonded to the outer surface of the carcass ply 14 differs, and as a result thereof, a variation arises in the bead internal diameter (R × 2).

However, in the tire manufacturing method of the present exemplary embodiment, even if the thickness of the carcass ply 14 changes, this merely results in the piston rod 23bL extending or contracting while being maintained parallel to the rotation axis line 0141 of the core AM, the radial direction position of the bead wire 8 pressed by the bonding roller 23a does not change, and the bead 16 of a specific internal diameter is obtained with suppressed variation in internal diameter.

### Other Exemplary Embodiments

Although exemplary embodiments of the present disclosure have been described above, the pressing device is not limited thereto, and obviously various modifications may be implemented within a scope not departing from the spirit of the present disclosure.

Although in the above exemplary embodiment an example is given in which the carcass ply 14 serves as the tire configuration member to which the bead wire 8 is bonded, the tire configuration member to which the bead wire 8 is bonded may be another member other than the carcass ply 14, such as a bead section reinforcement member (omitted in the drawings) adjacent to the carcass ply 14.

Although in the above exemplary embodiment the bead wire 8 is formed in a spiral shape bonded from the inner peripheral side toward the outer peripheral side, the bead wire 8 may be formed in a spiral shape bonded from the outer peripheral side toward the inner peripheral side.

The entire content of the disclosure of Japanese Patent Application No. 2022-198949 filed on December 13, 2022 is incorporated by reference in the present specification.

All publications, patent applications and technical standards mentioned in the present specification are incorporated by reference in the present specification to the same extent as if each individual publication, patent application, or technical standard was specifically and individually indicated to be incorporated by reference.

## Claims

1. A method of manufacturing a tire configured by bonding a bead wire to an outside face of a tire configuration member including an un-vulcanized rubber supported from an inside by a core, the tire manufacturing method comprising:
pressing the bead wire against the outside face by pressing parallel to a rotation axis line of the core, and moving the bead wire in a radial direction of the core while maintaining the parallel pressing state so as to bond in a spiral shape and form a bead.

2. The tire manufacturing method of claim 1, wherein the pressing is performed by a bonding roller supported by a piston rod of an air cylinder provided parallel to the rotation axis line.

3. The tire manufacturing method of claim 1 or claim 2, wherein a pressing force pressing the bead wire against the outer peripheral face is in a range of from 3N to 100N.

4. The tire manufacturing method of claim 1, wherein the tire configuration member is a carcass ply configured by a plurality of strands of cord arranged parallel to each other and covered in an un-vulcanized rubber.

5. A tire manufacturing device comprising:
a core that is rotatable and that supports a tire configuration member configured including an un-vulcanized rubber from an inside thereof;
a pressing device that presses a bead wire, fed out from a wire supply section, against an outside face of the tire configuration member by pressing parallel to a rotation axis line of the core; and
a moving device that moves the pressing device in a radial direction of the core while maintaining the parallel pressing state.
